# EUROPEAN PATENT APPLICATION

(11) **EP 4 641 439 A1**
(43) Date of publication of application: **29.10.2025**
(21) Application number: 23906834.9
(22) Date of filing: 12.12.2023
(51) Int. Cl.: G06K 19/077

(54) **WIRELESS IC MODULE, WIRELESS IC CARD, AND METHOD FOR MANUFACTURING WIRELESS IC MODULE**

(30) Priority: 22.12.2022 JP 2022205219
(71) Applicant: Kabushiki Kaisha Toshiba, Tokyo 105-0023 (JP)
(72) Inventor: MUROHARA, Masaru, Kawasaki-shi, Kanagawa 210-8541 (JP)
(74) Representative: HKW Intellectual Property PartG mbB
(86) International application number: PCT/JP2023/044486
(87) International publication number: WO 2024/135469

(57) **Abstract**

A wireless IC module according to an embodiment comprises a base substrate, a pair of antenna terminals that are formed on the base substrate and to which an antenna is connected, an IC chip mounted on the base substrate, a first connection line that connects the IC chip and one antenna terminal of the pair of antenna terminals, and a second connection line that connects the IC chip and the other antenna terminal of the pair of antenna terminals. The base substrate has an identification area where a notch for identification of a defective product is formed, and the first connection line is provided across the identification area such that the first connection line is cut when the notch is formed.

## Description

### Technical Field

Embodiments described herein relate generally to a wireless IC module, a wireless IC card, and a method for manufacturing a wireless IC module.

### Background Art

Wireless IC cards that communicate with the outside in a contactless manner via antennas are widely known as IC cards. In general, a wireless IC card comprises a card substrate, a wireless IC module embedded in the card substrate, and an antenna. The wireless IC module includes a large scale integration (LSI) which is an IC chip, an antenna terminal to which the antenna is connected, and a connection line which connects the IC chip with the antenna terminal.

In a wireless IC module determined to have problems with its functionality, appearance, or the like during inspection before being embedded in a wireless IC card, a notch for identification of a defective product is formed. It can be thereby visually checked whether the wireless IC module is defective or not. In a wireless IC module embedded in a wireless IC card, however, the notch cannot be visually checked. In addition, since the LSI and the antenna terminal are electrically connected, the wireless IC module determined to be defective may perform initial wireless operation and may be treated as a good product until the final functional inspection process after being embedded in the wireless IC card.

### Citation List

### Patent Literature

Patent Literature 1: JP 2013-77249 A

### Summary of Invention

### Technical Problem

Embodiments described herein aim to provide a wireless IC module, a wireless IC card, and a method for manufacturing a wireless IC module capable of suppressing outflow of defective products to the market.

### Solution to Problem

According to one embodiment, a wireless IC module comprises: a base substrate; a pair of antenna terminals that are formed on the base substrate and to which an antenna is connected; an IC chip mounted on the base substrate; a first connection line connecting the IC chip with one antenna terminal of the pair of antenna terminals; and a second connection line connecting the IC chip with the other antenna terminal of the pair of antenna terminals, wherein the base substrate includes an identification area where a notch for identification of a defective product is formed, and the first connection line is provided to cross the identification area so as to be cut when the notch is formed.

According to another embodiment, a wireless IC module comprises: a base substrate; a pair of antenna terminals located to be spaced apart from the base substrate by a gap; an IC chip mounted on the base substrate; and connection lines connecting the IC chip and each of the pair of antenna terminals, wherein each of the pair of antenna terminals includes a line connection portion to which the connection line is connected, and an antenna connection portion to which an antenna is connected, an antenna terminal of the pair of antenna terminals further includes an identification area where a notch for identification of a defective product is formed, and a slit located between the line connection portion and the antenna connection portion and having one end portion located in the identification area and the other end portion opening to the gap, and when the notch is formed, the notch and the slit electrically separate the line connection portion from the antenna connection portion.

According to yet another embodiment, a method for manufacturing a wireless IC module comprises: forming a metal lead frame including a frame body, a base substrate connected to the frame body, and a pair of antenna terminals connected to the frame body and opposed to and spaced apart from the base substrate by a gap, one antenna terminal of the pair of antenna terminals including a slit communicating with the gap; mounting an IC chip on the base substrate; connecting the IC chip with each of the pair of antenna terminals by connection lines; connecting the base substrate with the pair of antenna terminals by forming a sealing portion to cover the IC chip and the connection line; executing inspection on wireless operations of the IC chip and the pair of antenna terminals in a state in which the pair of antenna terminals are separated from the frame body; and if malfunction is determined by the inspection, forming a notch for identification of a defective product on the one antenna terminal such that the notch and the slit electrically separate a line connection portion to which the connection line is connected from an antenna connection portion to which an antenna is connected, at the one antenna terminal.

### Brief Description of Drawings

FIG. 1 is a plan view showing a wireless IC card according to a first embodiment.
FIG. 2 is a cross-sectional view taken along line A-A shown in FIG. 1.
FIG. 3 is a plan view showing the wireless IC module according to the first embodiment.
FIG. 4 is a cross-sectional view taken along line B-B shown in FIG. 3.
FIG. 5 is a plan view showing a state in which a notch is formed in the wireless IC module according to the first embodiment.
FIG. 6 is a plan view showing the wireless IC module according to a second embodiment.
FIG. 7 is a cross-sectional view taken along line C-C shown in FIG. 6.
FIG. 8 is a plan view showing a state in which a notch is formed in the wireless IC module according to the second embodiment.
FIG. 9A is a plan view showing a process of manufacturing the wireless IC module according to the second embodiment.
FIG. 9B is a plan view showing the process of manufacturing the wireless IC module according to the second embodiment, subsequent to FIG. 9A.
FIG. 9C is a plan view showing the process of manufacturing the wireless IC module according to the second embodiment, subsequent to FIG. 9B.
FIG. 9D is a plan view showing the process of manufacturing the wireless IC module according to the second embodiment, subsequent to FIG. 9C.

### Mode for Carrying Out the Invention

Each of embodiments will be described hereinafter with reference to the accompanying drawings. The disclosure is merely an example, and proper changes within the spirit of the invention, which are easily conceivable by a person of ordinary skill in the art, are included in the scope of the invention as a matter of course. In addition, in some cases, in order to make drawings and the description clearer, the widths, thicknesses, shapes and the like, of the respective parts are schematically illustrated, compared to the actual modes. However, the schematic illustration is merely an example, and adds no restriction to the interpretation of the invention. Besides, in the specification and drawings, the same elements as those described in connection with preceding drawings are denoted by like reference numbers, and a detailed description thereof is omitted unless necessary.

A wireless IC module and a wireless IC card according to an embodiment will be described hereinafter with reference to the accompanying drawings.

### (First Embodiment)

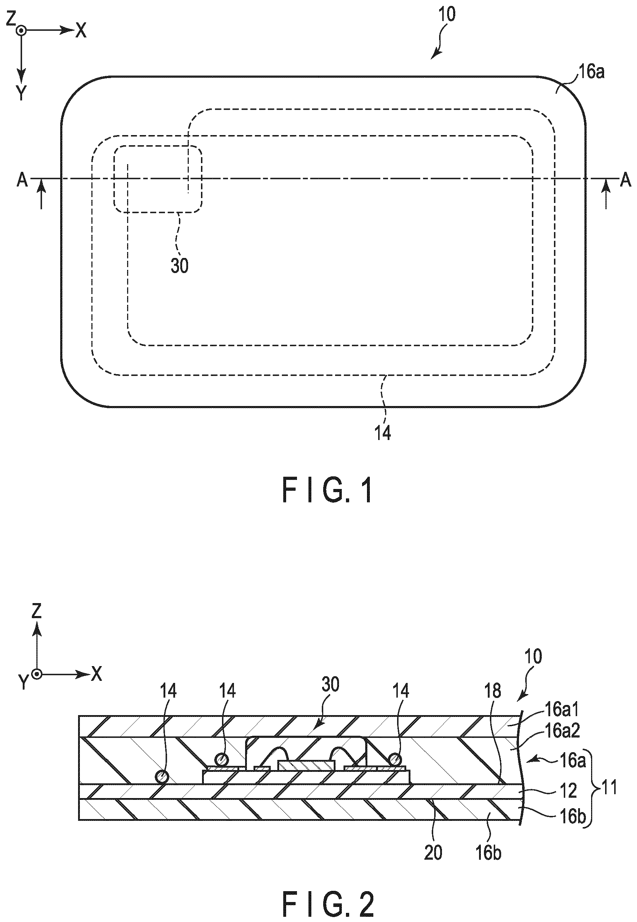

FIG. 1 is a plan view showing a wireless IC card 10 according to a first embodiment. FIG. 2 is a cross-sectional view taken along line A-A shown in FIG. 1. As shown in the figures, an X direction, a Y direction, and a Z direction orthogonal to each other are defined. The X direction corresponds to a length direction of the wireless IC card 10. The Y direction corresponds to a width direction of the wireless IC card 10. The Z direction corresponds to a thickness direction of the wireless IC card 10.

As shown in FIG. 1 and FIG. 2, the wireless IC card 10 comprises a card substrate 11, a wireless IC module 30, and an antenna 14. The card substrate 11 includes a base member 12 and oversheet materials 16a and 16b. The base member 12 is formed to extend in a plate shape and includes a first plane 18 and a second plane 20 on a side opposite to the first plane 18. The base member 12 is formed of a resin such as polyethylene terephthalate (PET), polyvinyl chloride (PVC), or polycarbonate (PC).

The oversheet materials 16a and 16b cover the base member 12, the wireless IC module 30, and the antenna 14. The oversheet materials 16a and 16b are formed of resin such as polyvinyl chloride or polycarbonate. Incidentally, in one example, the oversheet material 16a is composed of two sheets, i.e., a surface layer 16a1 and a core layer 16a2.

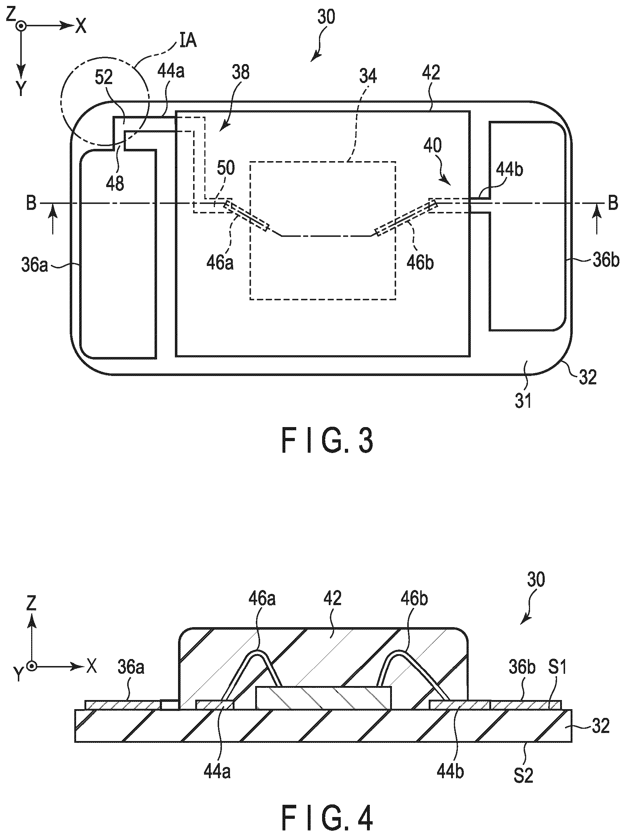

The wireless IC module 30 is mounted on the base member 12 (more specifically, the first plane 16) and embedded in the card substrate 11. In other words, the wireless IC module 30 is located inside the wireless IC card 10. Details of the wireless IC module 30 will be described later with reference to FIG. 3 to FIG. 5.

The antenna 14 is connected to the wireless IC module 30 (more specifically, antenna terminals 36a and 36b, which will be described later). The antenna 14 is an antenna coil formed of a metal such as aluminum, copper, or silver.

Next, the wireless IC module 30 will be described.

FIG. 3 is a plan view showing the wireless IC module 30 according to the first embodiment. In FIG. 3, an identification area IA of a base substrate 32 is represented by a two-dot chain line. FIG. 4 is a cross-sectional view taken along line B-B shown in FIG. 3.

As shown in FIG. 3 and FIG. 4, the wireless IC module 30 comprises a base substrate 32, an IC chip 34, a pair of antenna terminals 36a and 36b, a first connection line 38, a second connection line 40, and a sealing portion 42. The base substrate 32 is formed in a plate shape and is rectangular in a plan view. The base substrate 32 has a first main surface S1, a second main surface S2 on a side opposite to the first main surface S1, and the identification area IA. The base substrate 32 is formed of a material having electrical insulation properties. The material of the base substrate 32 is, for example, glass epoxy. In one example, the thickness of the base substrate 32 is approximately 75 µm.

The IC chip 34 is mounted on the base substrate 32. For example, the IC chip 34 is mounted on the base substrate 32 via an adhesive. The IC chip 34 is located in the center of the first main surface 44. The IC chip 34 is, for example, a large scale integration (LSI) that is a semiconductor chip.

The pair of antenna terminals 36a and 36b are formed on the base substrate 32. The pair of antenna terminals 36a and 36b are located to sandwich the IC chip 34 in the X direction. The pair of antenna terminals 36a and 36b are located to be spaced apart from the IC chip 34. The antenna 14 is connected to the antenna terminals 36a and 36b.

The first connection line 38 connects the IC chip 34 and the antenna terminal 36a. The first connection line 38 includes a metal foil 44a and a wire 46a. The metal foil 44a is formed on the base substrate 32. The metal foil 44a has one end (first connection portion 48) connected to the end portion of the antenna terminal 36a in the Y direction, the other end (second connection portion 50) to which the wire 46a is connected, and a notched portion 52 which is located between the first connection portion 48 and the second connection portion 50 and which passes through the identification area IA. In one example, the thickness of the metal foil 44a is approximately 35 µm. One end of the wire 46a is connected to the first connection portion 48 of the metal foil 44a, and the other end of the wire 46a is connected to the IC chip 34. The wire 46a is a gold wire formed by wire bonding.

The second connection line 40 connects the IC chip 34 and the antenna terminal 36b. The second connection line 40 includes a metal foil 44b and a wire 46b. The metal foil 44b is formed on the base substrate 32. The metal foil 44b has one end connected to the end portion of the antenna terminal 36b in the X direction, and the other end to which the wire 46b is connected. In one example, the metal foil 44b is formed to extend along the X direction. In one example, the metal foil 44b is formed to extend linearly toward the IC chip 34. One end of the wire 46b is connected to the metal foil 44b, and the other end of the wire 46b is connected to the IC chip 34. The wire 46b is a gold wire formed by wire bonding.

The sealing portion 42 covers the IC chip 34 and the wires 46a and 46b. The sealing portion 42 protects the IC chip 34. The sealing portion 42 is formed in a substantially rectangular shape in plan view. One end of the sealing portion 42 in the X direction is located between the antenna terminal 36a and the wire 46a, and the other end of the sealing portion 42 in the X direction is located between the wire 46b and the antenna terminal 36b. The sealing portion 42 is a molding resin and has electrical insulation properties. The sealing portion 42 is formed of, for example, a thermosetting epoxy resin.

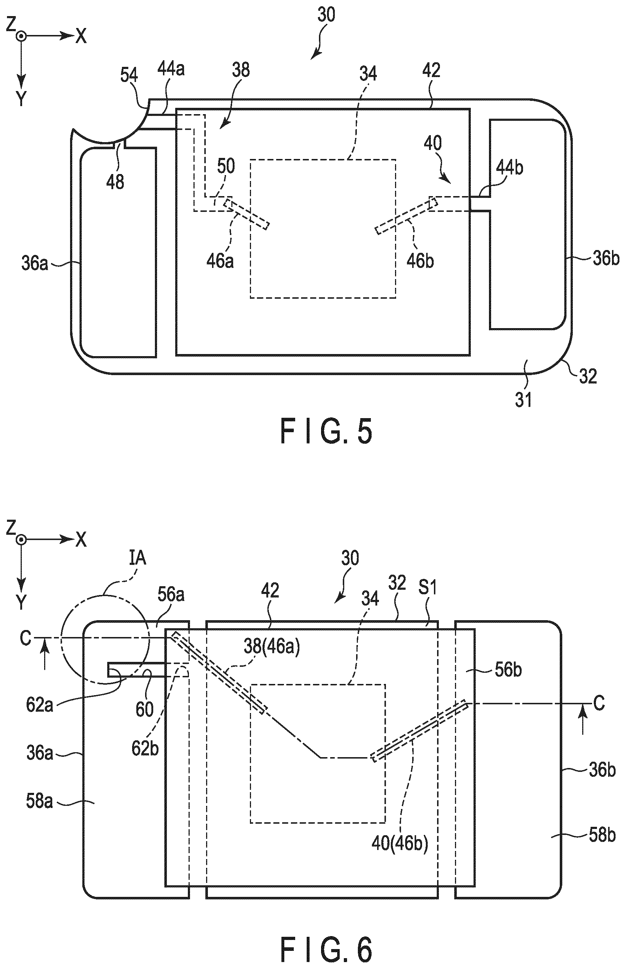

FIG. 5 is a plan view showing a state in which a notch 54 is formed in the wireless IC module 30 according to the first embodiment.

As shown in FIG. 5, if it is determined that there is a problem with the function or appearance of the wireless IC module 30 during inspections when manufacturing the wireless IC module 30, a notch 54 for identification of a defective product is formed in the identification area IA. When the notch 54 is formed in the base substrate 32 as described above, the first connection line 38 is cut. In other words, the first connection line 38 is provided across the identification area IA so as to be cut when the notch 54 is formed. In one example, the metal foil 44a extends across the identification area IA so as to be cut when the notch 54 is formed. As a result, when the notch 54 is formed, the electrical connection between the IC chip 34 and the antenna terminal 36a is broken.

Incidentally, the above-mentioned inspections when manufacturing the wireless IC module 30 include, for example, an inspection to determine whether an electrical connection is made by applying an electrode for inspection to the antenna terminals 36a and 36b, and an inspection of the communication function to determine whether an antenna for inspection is operated by applying an antenna for inspection to the antenna terminals 36a and 36b. One example of the inspection of the communication function is to determine whether the function can operate even with a low power.

In addition, an example that the first connection line 38 crosses the identification area IA, thereby breaking the electrical connection between the IC chip 34 and the antenna terminal 36a when forming the notch 54 for identification of defective products, has been described. However, a notch for breaking the electrical connection may be formed in addition to the notch for identification of defective products.

Advantages of the first embodiment will be described.

According to the wireless IC module 30 and the wireless IC card 10 of the first embodiment, the wireless IC module 30 comprises the first connection line 38 that crosses the identification area IA so as to be cut when the notch 54 is formed.

As a result, the notch 54 is formed when it is determined that there is a problem with the function or appearance of the wireless IC card 10, and defective products can be visually identified and the electrical connection between the IC chip 34 and the antenna terminal 36a can be broken by the notch 54.

In addition, since the electrical connection between the IC chip 34 and the antenna terminal 36a can be broken, in the wireless IC module 30 determined to have a problem in function or appearance, it can be confirmed that the wireless IC module 30 can be checked as a defective product by performing a communication inspection even if the wireless IC module 30 is embedded inside the wireless IC card 10. In other words, it is possible to obtain the wireless IC module 30 and the wireless IC card 10 that can prevent defective products from being released onto the market.

### (Second Embodiment)

Next, a second embodiment will be described. Incidentally, a wireless IC module 30 is configured similarly to the first embodiment, except for configurations described in the second embodiment.

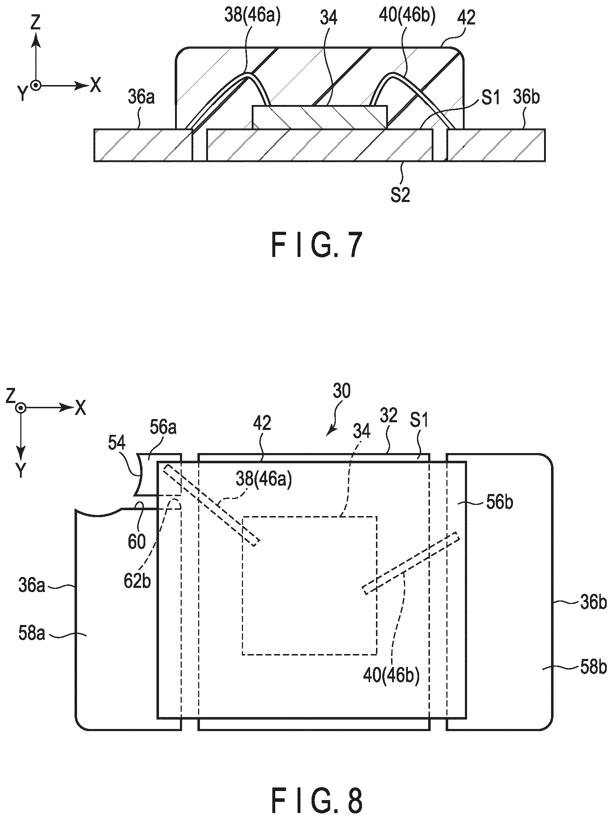

FIG. 6 is a plan view showing the wireless IC module 30 according to the second embodiment. FIG. 7 is a cross-sectional view taken along line C-C shown in FIG. 6.

As shown in FIG. 6 and FIG. 7, the wireless IC module 30 comprises a base substrate 32, an IC chip 34, a pair of antenna terminals 36a and 36b, a first connection line 38, a second connection line 40, and a sealing portion 42.

The material of the base substrate 32 is metal and is constituted based on copper foil having a thickness of 70 µm.

The pair of antenna terminals 36a and 36b are located to sandwich the base substrate 32 in the X direction. The pair of antenna terminals 36a and 36b are located to be spaced apart from the base substrate 32. The antenna terminal 36a includes a line connection portion 56a, an antenna connection portion 58a, an identification area IA, and a slit 60. The first connection line 38 is connected to the line connection portion 56a. The antenna 14 is connected to the antenna connection portion 58a.

The slit 60 is located between the line connection portion 56a and the antenna connection portion 58a. The slit 60 has one end portion 62a located in the identification area IA and the other end portion 62b opening to a gap between the base substrate 32 and the antenna terminal 36a. The slit 60 is formed to communicate with the gap and to penetrate the antenna terminal 36a in the Z direction.

The antenna terminal 36b includes a line connection portion 56b and an antenna connection portion 58b. The second connection line 40 is connected to the line connection portion 56b. The antenna 14 is connected to the antenna connection portion 58b.

The first connection line 38 is a wire 46a, and electrically connects the line connection portion 56a with the IC chip 34. The second connection line 40 is a wire 46b, and electrically connects the line connection portion 56b with the IC chip 34.

The sealing portion 42 covers the base substrate 32, the IC chip 34, the first connection line 38 (wire 46a), the second connection line 40 (wire 46b), and the end portions of the antenna terminals 36a and 36b on the base substrate 32 side. Both ends of the sealing portion 42 in the X direction are located to sandwich the first connection line 38 and the second connection line 40. In one example, one end of the sealing portion 42 on the antenna terminal 36a side in the X direction is located between the first connection line 38 and one end portion 62a of the slit 60.

The sealing portion 42 is located between the base substrate 32 and the antenna terminals 36a and 36b, and connects the antenna terminals 36a and 36b to the base substrate 32. In one example, both ends of the sealing portion 42 in the Y direction are located between both ends of the base substrate 32 in the Y direction. Incidentally, both ends of the sealing portion 42 in the Y direction may correspond to both ends of the base substrate 32 in the Y direction or may be located outside both ends of the base substrate 32 in the Y direction.

FIG. 8 is a plan view showing a state in which a notch is formed in the wireless IC module according to the second embodiment.

As shown in FIG. 8, if it is determined that there is a problem with the function or appearance during inspections at manufacturing, a notch 54 is formed at the antenna terminal 36a. The notch 54 and the slit 60 break the electrical connection between the line connection portion 56a and the antenna connection portion 58a in the antenna terminal 36a. In other words, the slit 60 is formed so as to electrically separate the line connection portion 56a from the antenna connection portion 58a when the notch 54 is formed.

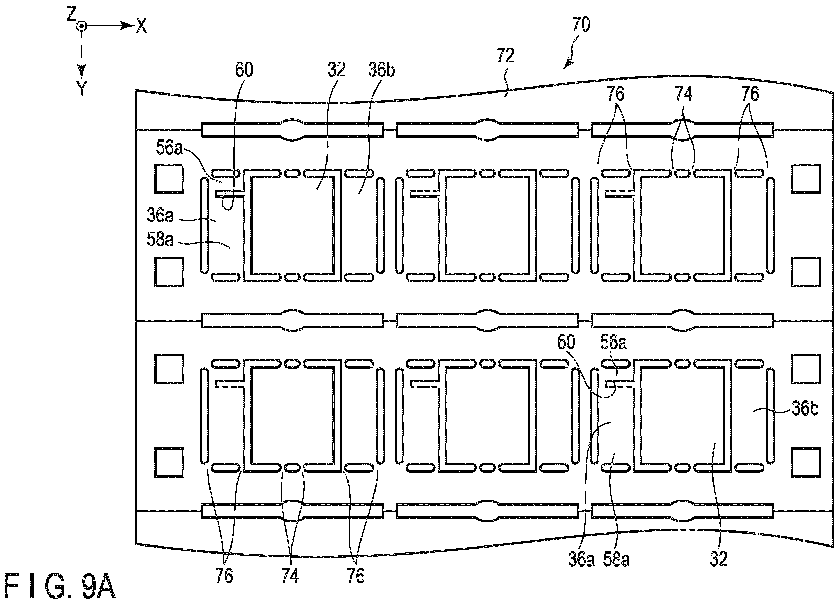

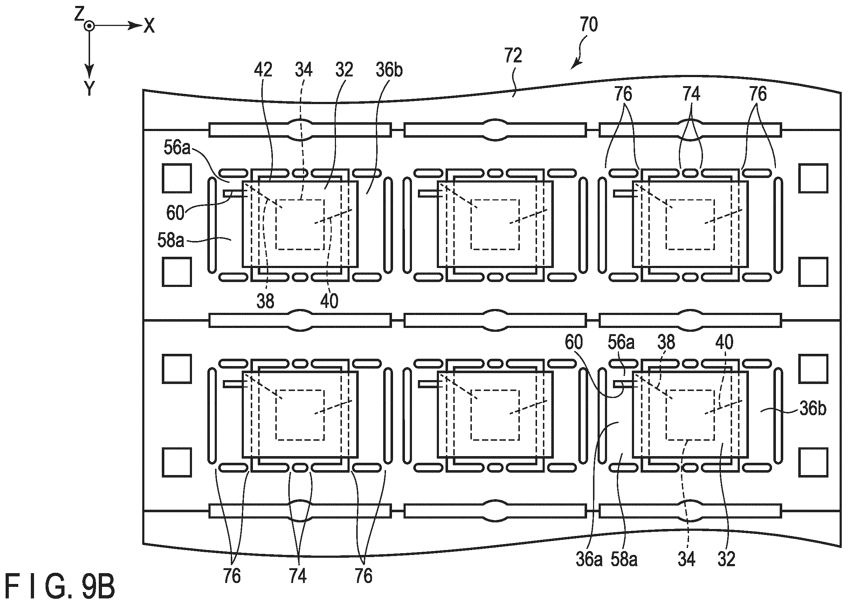

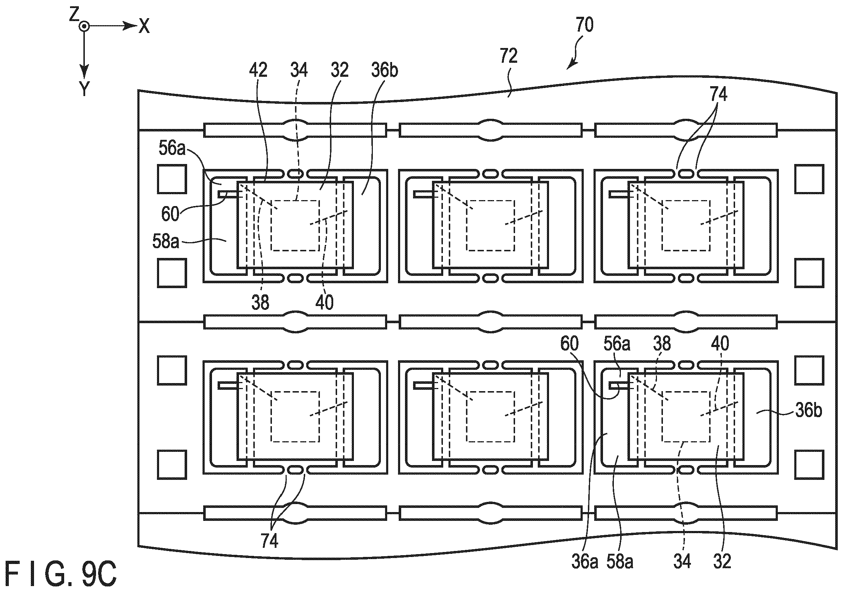

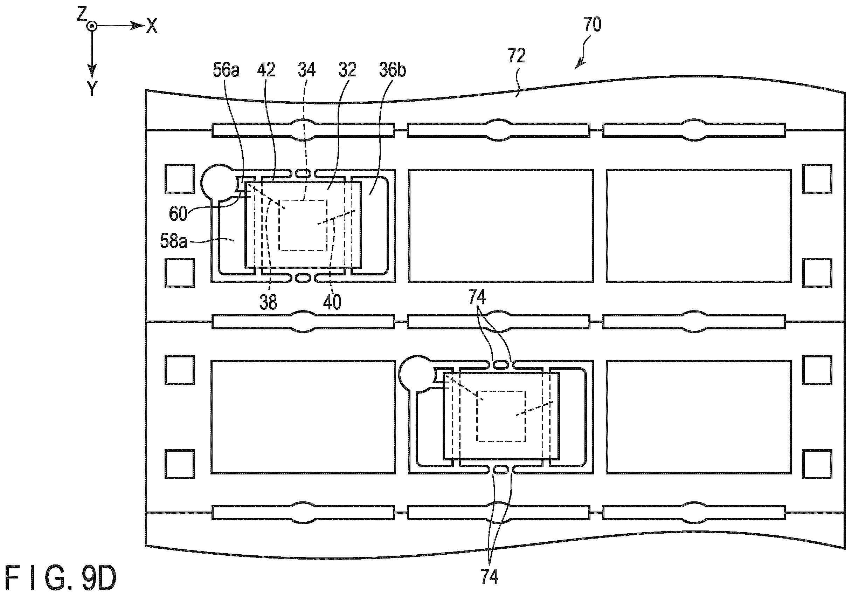

Next, a method for manufacturing the wireless IC module 30 according to the second embodiment will be described with reference to FIG. 9A, FIG. 9B, FIG. 9C, and FIG. 9D.

FIG. 9A is a plan view showing a process of manufacturing the wireless IC module according to the second embodiment.

As shown in FIG. 9A, when manufacturing the wireless IC module 30 is started, first, a metal lead frame 70 including a frame body 72, the base substrate 32, and the pair of antenna terminals 36a and 36b is formed.

At this time, the base substrate 32 is connected to the frame body 72. More specifically, both ends of the base substrate 32 in the Y direction are connected to the frame body 72 via first connection portions 74.

The pair of antenna terminals 36a and 36b are connected to the frame body 72, and are opposed to and spaced apart from the base substrate 32 by a gap. More specifically, four corners of the antenna terminals 36a and 36b are connected to the frame body 72 via second connection portions 76. Furthermore, one of the pair of antenna terminals 36a and 36b (antenna terminal 36a in one example) includes the slit 60 which communicates with the gap. A method for forming the slit 60 is, for example, punching.

The frame body 72 is a metal plate formed to extend along the Y direction. In one example, the metal lead frame 70 includes, inside the frame body 72, a plurality of sets of base substrates 32 and pairs of antenna terminals 36a and 36b aligned in the X direction and the Y direction.

FIG. 9B is a plan view showing the process of manufacturing the wireless IC module 30 according to the second embodiment, subsequent to FIG. 9A.

As shown in FIG. 9B , after forming the metal lead frame 70, the IC chip 34 is mounted on the base substrate 32, the IC chip 34 and the antenna terminal 36a are connected by the first connection line 38, and the IC chip 34 and the antenna terminal 36b are connected by the second connection line 40. Next, the sealing portion 42 is formed so as to cover the IC chip 34, the first connection line 38, and the second connection line 40. As a result, the antenna terminals 36a and 36b are connected to the base substrate 32.

FIG. 9C is a plan view showing the process of manufacturing the wireless IC module 30 according to the second embodiment, subsequent to FIG. 9B.

As shown in FIG. 9C, after forming the sealing portion 42, the second connection portion 76 is removed by a method such as punching, thereby separating the antenna terminals 36a and 36b from the frame body 72. As a result, the antenna terminals 36a and 36b become electrically independent from the base substrate 32 and the frame body 72. Next, an inspection (communication inspection) is performed on the wireless operations of the IC chip and the antenna terminals 36a and 36b.

FIG. 9D is a plan view showing the process of manufacturing the wireless IC module 30 according to the second embodiment, subsequent to FIG. 9C.

As shown in FIG. 9D, if malfunction is determined by the communication inspection, the notch 54 for identification of a defective product is formed in one of the pair of antenna terminals 36a and 36b (in one example, antenna terminal 36a), and the electrical connection between the line connection portion 56a and the antenna connection portion 58a is broken by the notch 54 and the slit 60.

In contrast, if no malfunction is determined by the communication inspection, the first connection portion 74 is removed to release the connection between the base substrate 32 and the frame body 72, and manufacturing the wireless IC module is completed.

Incidentally, the example of determining whether or not to form the notch 54 by the communication inspection has been described in the above manufacturing method, but whether or not to form the notch 54 may be determined by a method other than the communication inspection. For example, whether or not to form the notch 54 may be determined by appearance inspection of determining whether or not there are scratches or damage, or conduction inspection of checking whether or not the IC chip 34 and the antenna terminals 36a and 36b are electrically connected.

Advantages of the second embodiment will be described.

According to the wireless IC module and the method for manufacturing the wireless IC module according to the second embodiment, since the wireless IC module 30 comprises the antenna terminal 36a including the identification area IA and the slit 60, the electrical connection between the line connection portion 56a and the antenna connection portion 58a can be broken when the notch 54 is formed in the antenna terminal 36a. A wireless IC module and a method for manufacturing a wireless IC module capable of suppressing outflow of defective products to the market can be thereby obtained.

While certain embodiments have been described, these embodiments have been presented by way of example only, and are not intended to limit the scope of the inventions. The novel embodiments described herein may be embodied in a variety of other forms; furthermore, various omissions, substitutions and changes in the form of the embodiment described herein may be made without departing from the spirit of the invention. The accompanying claims and their equivalents are intended to cover such forms or modifications as would fall within the scope and spirit of the inventions. A plurality of embodiments can also be combined as needed.

## Claims

1. A wireless IC module comprising:
a base substrate;
a pair of antenna terminals that are formed on the base substrate and to which an antenna is connected;
an IC chip mounted on the base substrate;
a first connection line connecting the IC chip with one antenna terminal of the pair of antenna terminals; and
a second connection line connecting the IC chip with the other antenna terminal of the pair of antenna terminals, wherein
the base substrate includes an identification area where a notch for identification of a defective product is formed, and
the first connection line is provided to cross the identification area so as to be cut when the notch is formed.

2. The wireless IC module of claim 1, wherein
the first connection line includes metal foil provided on the base substrate and connected to the one antenna terminal, and a wire connected to the metal foil and the IC chip, and
the metal foil extends across the identification area.

3. A wireless IC module comprising:
a base substrate;
a pair of antenna terminals located to be spaced apart from the base substrate by a gap;
an IC chip mounted on the base substrate; and
a connection line connecting the IC chip and each of the pair of antenna terminals, wherein
each of the pair of antenna terminals includes a line connection portion to which the connection line is connected, and an antenna connection portion to which an antenna is connected,
one antenna terminal of the pair of antenna terminals further includes an identification area where a notch for identification of a defective product is formed, and a slit located between the line connection portion and the antenna connection portion and having one end portion located in the identification area and the other end portion opening to the gap, and
when the notch is formed, the notch and the slit electrically separate the line connection portion from the antenna connection portion.

4. A wireless IC card comprising:
a card substrate;
a wireless IC module of claim 1 or 3, which is embedded in the card substrate; and
an antenna provided on the card substrate and connected to an antenna terminal of the wireless IC module.

5. A method for manufacturing a wireless IC module, the method comprising:
forming a metal lead frame including a frame body, a base substrate connected to the frame body, and a pair of antenna terminals connected to the frame body and opposed to and spaced apart from the base substrate by a gap, one antenna terminal of the pair of antenna terminals including a slit communicating with the gap;
mounting an IC chip on the base substrate;
connecting the IC chip with each of the pair of antenna terminals by a connection line;
connecting the base substrate with the pair of antenna terminals by forming a sealing portion to cover the IC chip and the connection line;
executing inspection on wireless operations of the IC chip and the pair of antenna terminals in a state in which the pair of antenna terminals are separated from the frame body; and
if malfunction is determined by the inspection, forming a notch for identification of a defective product on the one antenna terminal such that the notch and the slit electrically separate a line connection portion to which the connection line is connected from an antenna connection portion to which an antenna is connected, at the one antenna terminal.
